(19) Europäisches Patentamt
European Patent Office
Office européen des brevets

(11) **EP 4 779 229 A2**

(12) **EUROPEAN PATENT APPLICATION**

(43) Date of publication:
**22.07.2026 Bulletin 2026/30**

(21) Application number: **26180324.1**

(22) Date of filing: **30.06.2022**

(51) International Patent Classification (IPC):
***F24H 15/225*** (2022.01)

(52) Cooperative Patent Classification (CPC):
**G01K 1/143; F24H 15/225; G01K 1/026;**
F24D 2220/042; F24D 2220/08; F24D 2240/26

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.07.2021 GB 202109554**

(62) Document number(s) of the earlier application(s) in
accordance with Art. 76 EPC:
**22735224.2 / 4 363 816**

(71) Applicant: **Mixergy Limited
Oxfordshire OX9 3EZ (GB)**

(72) Inventors:
• **ARMSTRONG, Peter**
**Thame, OX9 3EZ (GB)**
• **DRUMMOND, Steve**
**Thame, OX9 3EZ (GB)**

(74) Representative: **Mathys & Squire
32 London Bridge Street
The Shard
London SE1 9SG (GB)**

Remarks:
This application was filed on 21.05.2026 as a
divisional application to the application mentioned
under INID code 62.

(54) **TEMPERATURE SENSOR, HEATING SYSTEM AND CONTROLLER**

(57)    A sensor for measuring a temperature distribution of fluid within a vessel is described. The sensor for measuring a temperature distribution of fluid within a vessel comprises an array of sensing elements. Each element has a temperature-dependent parameter. The sensor comprises a cascaded array of latches. Each latch is configured to control a switching element corresponding to a one of the sensing elements thereby to selectively provide a current path to the one of the sensing elements. The sensor comprises a signal line to which each of the sensing elements is electrically connected for providing a signal to a measurement module. A water heating system is also described. A retrofittable tank controller for controlling a water heating system is also described.

Figure 1

EP 4 779 229 A2

## Description

The present disclosure relates to a water heating system, a hot water tank controller and a sensor and sensor arrangement for measuring a temperature distribution of fluid within a vessel. In particular, the disclosure describes a water heating system ready to receive a retrofittable hot water tank controller which may determine information about the water heating system to which it is retrofitted. The disclosure also describes an extensible sensor for measurement of temperature distributions within a vessel. The sensor may permit determination the amount of useful energy which can be recovered for domestic hot water or space heating applications along with cooling applications where chilled water is stored.

## Background

For accurate measurement and monitoring of useable energy content within a stratified fluid a number of temperature measurements at discrete intervals down the length of the tank is required. The challenge is to facilitate all of these measurements without requiring multiple signal lines back to a central data acquisition or measurement system. In the case of a hot water tank, it is advantageous to arrange temperature sensing arrays on a flexible and adhesive strip. However, the material cost of the strip is influenced by the number of channels (also referred to as tracks or lines) on the strip, which affects both the width of the strip and the complexity of the connection between the strip and any data acquisition or measurement system.

For a typical domestic hot water tank, anywhere between 8 to 12 sensors located at even linear intervals might be required to infer the complete temperature distribution throughout the system with sufficient resolution. For larger commercial applications, this number might be 20 or more. Having to arrange more and more tracks or lines as the length of the sensor increases means that the strip has to progressively increase in width. This makes product management challenging since multiple sensor variants are required depending upon the vessel dimensions and number of individual sensor elements needed.

The present disclosure aims to ameliorate some or all of the above-mentioned problems.

## Summary of the invention

Aspects and embodiments of the present invention are set out in the appended claims. These and other aspects and embodiments of the invention are also described herein.

According to an aspect described herein, there may be provided a sensor for measuring a temperature distribution of fluid within a vessel, the sensor comprising: an array of sensing elements, each element having a temperature dependent parameter; a cascaded array of latches, each latch being configured to control a switching element corresponding to a one of the sensing elements thereby to selectively provide a current path to the one of the sensing elements; a signal line to which each of the sensing elements is electrically connected for providing a signal to a measurement module. By providing a cascaded array of latches to allow individual addressability of the sensing element and providing a shared a signal line for the sensing elements, a simpler and more easily manufacturable sensor may be provided that does not require increasing number of lines or tracks as the number of sensing element sis increased. It may also provide a sensor that may be more easily couplable to another sensor in order to provide an extensible sensor, which may be particularly suited to retrofitting to vessels of differing sizes. The array of sensing elements can permit measuring temperatures at different locations on the vessel, in order to determine the temperature distribution of fluid within the vessel.

The sensor may be configured to be couplable to a further identical sensor thereby to provide an extensible sensor. This will allow the temperature distribution in vessels of differing sizes to be determined using the same sensors coupled together to effectively form a sensor of the appropriate size. The sensor may include a coupling portion for coupling to a further identical sensor thereby to provide an extensible sensor. The coupling portion may comprise a number of connection pads in a printed circuit board or an electrical connector. The sensor may be a modular sensor to provide a sensor of a desired length.

The sensor may further comprise a substrate that is a flexible strip. This may permit the sensor to be affixed more easily to different vessels the outer walls of which may have different shapes.

The sensor may include a flexible circuit. This can provide flexibility to the sensor and may allow the sensing elements, in particular when affixed, to maintain close proximity to the vessel for improved thermal coupling. The sensor may include a flexible conductive track.

The sensor may comprise an adhesive layer for attachment of the sensor to the vessel. Advantageously, this provides a simple method for affixing the sensor to the vessel.

The sensor may comprise printed circuit board, preferably a flexible printed circuit board. The provides a simple method of manufacture for the sensor.

The sensing elements may be connected in parallel. This may permit a more error tolerant sensor, as failure of an individual sensing element need not break the circuit to other sensing elements.

The array of latches is preferably configured or cascaded to provide a current path individually and sequentially to each sensing element in the array of sensing elements. This advantageously permits the sensing elements to be addressed on a one-by-one basis in sequence along the array, allowing a determination of the temperature distribution of the vessel. This may also reduce electromagnetic interference between adjacent components in the arrays.

The sensor may further comprise a data input line into an input data channel of a first latch in the array and a data output line from an output data channel of a final latch in the array. By connecting the data output line of a first sensor to the data input line of a second sensor a daisy chain of sensors can be formed. A further component can be connected to the sensor to deliver in use an input data pulse to the first sensor onward to the second sensor.

The cascaded array of latches may be a shift register. This provides a simple clocked cascade of latches to sequentially address the sensing elements.

The sensor may further comprise a clock line, wherein each latch is configured to receive a clock signal via the clock line. This may reduce the number of lines required to deliver the clock signal to the array of latches and provide for a means of extending the clock line to a further array of latches. This facilitates manufacture and extension of the sensor.

The sensor may further comprise a power line, wherein each latch is configured to receive power from the power line. By sharing a power line between latches, the number of input and output lines to the sensor can be reduced which facilitates manufacture and extension of the sensor.

The sensor may further comprise a ground line, wherein each switching element is configured to selectively ground its corresponding sensing element via the ground line. By sharing a ground line between elements of the sensor, the number of input and output lines to the sensor can be reduced which facilitates manufacture and extension of the sensor.

The sensor may comprise at least one input towards a first side of the sensor and at least one output towards the second side of the sensor, wherein the number of inputs is the same as the number of outputs. By requiring only the same number of inputs as outputs to the sensor, identical sensors may be chained together to form one longer sensor without increasing the width of the sensors (to deliver additional lines) as the length of the chain increases.

The sensor may further comprise a measurement module configured to determine measurement values in response to signals received via the signal line. This may provide for a sensor which can determine the temperature experienced by multiple sensors without having to alter the channel by which the module receives in information.

The measurement module may be configured to determine a temperature distribution of the vessel in dependence on the measurement values. This may permit accurate monitoring of the conditions within the vessel, in particular the determination of the stratification (for example, a thermocline) of the fluid within the vessel to provide an improved hot water, space heating, or cooling system.

The measurement module may be configured to determine the temperature distribution in dependence on a model, preferably wherein the model is an interpolant model. This may permit more accurate determination of the temperature distribution within the vessel.

The measurement module may be configured to determine a number of sensing elements in the array and/or a length of the sensor and/or position of each sensing element in the array. A length may be determined by multiplying a number of sensing elements in the array by a predetermined spacing between sensing elements. A number of sensing elements in the array may be determined by determining a number of distinct responses received from the sensor in response to an input. This may reduce the calibration required on installing sensor or sensor arrangement, since the length of the sensor or sensor arrangement need not be programmed manually. The measurement module may be configured to determine a vessel volume based on a length of the sensor. The measurement module may be configured to determine a vessel volume further based on a vessel characteristic, such as a compact or slimline vessel or standard vessel. The sensor may include a sensing element encoding a vessel characteristic.

The sensor may further include a thermal cutout arrangement according to any aspect described herein.

According to an aspect described herein, there may be provided a thermal cutout arrangement for a hot water tank, the arrangement comprising: a detector for detecting a temperature of the tank; a latching relay configured to prevent delivery of power to a heating element in response to a detected temperature of the tank. This may provide a simple and cheap safety arrangement while minimising heat losses from the tank.

The detector may comprise a thermistor, preferably a negative temperature coefficient thermistor. This may permit a simple and easily manufacturable device for detecting changes in temperature within the tank.

The detector may be configured to generate a reset pulse when a threshold temperature is exceeded, and the latching relay is configured to switch to an open configuration in response to receiving the reset pulse. This may provide an improved safety arrangement by permitting a fast response to a dangerous temperature within the tank.

The thermal cutout arrangement may further comprise a manual switch configured to switch the latching relay to a closed configuration when actuated. This may provide for a thermal cutout arrangement with improved properties, since the power to the heating element can be returned with manual intervention (i.e. likely as a result of a safety inspection, rather than a power cycling of the arrangement). Preferably, the latching relay can only be switched to from the open to the closed arrangement as a result of actuating the manual switch.

According to an aspect described herein, there may be provided a sensor arrangement comprising: a plurality of sensors according to any aspect of the disclosure, wherein the signal lines of the plurality of sensors are connected to provide a shared signal line for the plurality of sensors, and the cascaded array of latches of the plurality of sensors are connected to provide an extended cascaded array of latches across the sensor arrangement.

The plurality of sensors may be connected by soldering. Particularly by soldering the inputs of the plurality of sensors to the outputs of another of the plurality of sensors, thereby to form a chain of sensors. The inputs and outputs may be ends of the lines of the sensors, for example, an input may correspond to the end of a signal line, a data line, a power line, a ground line or a clock line towards a first end of a sensor, and the outputs may correspond to an end of a signal line, a data line, a power line, a ground line or a clock line towards a second end of a sensor. The second end of a sensor may thus be easily connected to the first end of another sensor, e.g. by soldering.

The sensor arrangement may include a thermal cutout arrangement according to any aspect described herein. This may allow an integrated system to be provided to both determine the temperature distribution within a vessel and a safety system, thus reducing the complexity and burden of installing separate and incompatible systems.

According to an aspect described herein, there may be provided an extensible circuit topology wherein an arbitrary number of sensing elements can be measured through a common signal line in conjunction with a corresponding number of switching elements which are toggled by a corresponding number of cascaded latches which share a common clock signal

The components of the extensible circuit topology may be arranged on discrete lengths of a flexible printed circuit board with an adhesive backing which are soldered together to form a complete sensing assembly which can be secured onto the outer surface of a hot water tank or other vessel containing a stratified fluid.

The individual sensing values are processed by an algorithm which maps an interpolant function to the dataset. This may permit more accurate calculation of energy content in the vessel of fluid above a threshold temperature (also referred to herein as a 'useful' temperature).

The interpolant function may be a spline curve model.

The interpolant function may be a solution to the heat equation which results in an analytical equation which is then fitted to the data set using a gradient descent algorithm

According to an aspect described herein, there may be provided a water heating system comprising: a vessel for holding water and for receiving heat from one or more heat sources for heating water in the vessel; a sensor comprising a plurality of temperature sensing elements for sensing a distribution of temperatures in the vessel; a connector for connecting the sensor to a retrofittable tank controller; and wherein the water heating system is configured to provide one or more characteristics of the water heating system to a retrofittable tank controller such that a retrofittable tank controller connected to the sensor and in receipt of the characteristics of the water heating system can determine from the distribution of temperatures in the vessel a quantity of useable heat stored in the vessel.

The sensor may be configured to provide one or more characteristics of the water heating system to a retrofittable tank controller.

The water heating system, preferably the sensor, may comprise one or more fixed value resistors encoding one or more characteristics of the water heating system.

The water heating system, preferably the sensor, may comprise an EEPROM programmed with the one or more characteristics of the water heating system.

The water heating system may comprise a visual identifier, preferably a QR code or a barcode, configured to encode one or more characteristics of the water heating system.

The one or more characteristics may comprise one or more of: a characteristic of the vessel; a volume of the vessel; a height of the vessel; a diameter or width of the vessel; an indication of a footprint of a vessel; a manufacturer of the vessel; an identity of the vessel; a shape of the vessel; a characteristic of the one or more heat sources; a number of heat sources; a type or types of the heat sources; a characteristic of the sensor; a number of temperature sensing elements of the sensor; a length of the sensor; a spacing between temperature sensing elements of the sensor.

The sensor is preferably configured to provide a height of the vessel or a number of temperature sensing elements of the sensor or a length of the sensor or a vessel volume based on a length of the sensor to a retrofittable tank controller.

The sensor or another means may be configured to provide an indication of a footprint of the vessel and optionally a characteristic of the one or more heat sources to a retrofittable tank controller.

The water heating system may comprise a mechanical thermostat with a non-resettable high limit for controlling one or more heat sources for heating water in the vessel in a configuration without a retrofittable tank controller.

The water heating system may comprise one or more heat sources for heating water in the vessel, optionally one or more of: an electric heater disposed in the vessel; a gas boiler; a heat pump; a solar thermal device; and a solar photovoltaic device.

The one or more heat sources may be configured to provide heat to the vessel in dependence on the mechanical thermostat.

A connection between the one or more heat sources and the mechanical thermostat may comprise a node for connection of a retrofittable tank controller.

The sensor may comprise one or more of: a flexible substrate; a flexible circuit; an adhesive layer for attachment of the sensor to the vessel; and a flexible printed circuit board.

The sensor may comprise an array of sensing elements, each element having a temperature-dependent parameter; a cascaded array of latches, each latch being configured to control a switching element corresponding to a one of the sensing elements thereby to selectively provide a current path to the one of the sensing elements; a signal line to which each of the sensing elements is electrically connected for providing a signal to a measurement module.

The sensor may be as aforementioned.

According to an aspect described herein, there may be provided a retrofittable tank controller for controlling a water heating system comprising: a connector for connecting the retrofittable tank controller to a sensor of the water heating system, the sensor comprising a plurality of temperature sensing elements for sensing a distribution of temperatures in a vessel; a determination module for determining a maximum useable heat capacity of the water heating system in dependence on one or more characteristics of the water heating system received from the water heating system; and a controller module configured to control one or more heat sources in dependence on a useable heat stored in the vessel and a maximum useable heat capacity of the water heating system.

The water heating system may be as aforementioned. The sensor may be as aforementioned.

The controller module is preferably configured to determine a useable heat stored in the vessel in dependence on a sensed distribution of temperatures in a vessel. The controller module is preferably configured to determine a useable heat stored in the vessel in dependence on a useable temperature threshold.

Determining a maximum useable heat capacity of the water heating system may comprise performing a self-calibration routine. The self-calibration routine may include: providing heat to the vessel until a maximum heated state is reached; and determining a distribution of temperatures in the vessel in the maximum heated state. The self-calibration routine may include using the distribution of temperatures in the vessel in the maximum heated state as a reference for a useable heat stored in the vessel.

The retrofittable tank controller may be configured to determine a useable heat stored in the vessel in dependence on signals received from the sensor.

The retrofittable tank controller may be configured to control the one or more heat sources in dependence on an energy availability measure, preferably a grid stress indicator, a power pricing signal, and/or a weather forecast.

The retrofittable tank controller may be configured to determine a useable heat stored in the vessel in dependence on a target output temperature of a blending valve.

According to an aspect described herein, there may be provided a controller for a water heating system, wherein the controller is configured to determine a maximum useable heat capacity of a water heating system and configured to perform a self-calibration routine including: providing heat to a vessel holding water until a maximum heated state is reached; and determining a distribution of temperatures in the vessel in the maximum heated state The water heating system may be as aforementioned. The controller may be a retrofittable tank controller as aforementioned.

The self-calibration routine may further include using the distribution of temperatures in the vessel in the maximum heated state as a reference for a useable heat stored in the vessel. The controller may be configured to use the distribution of temperatures in the vessel in the maximum heated state as a reference for a useable heat stored in the vessel.

According to an aspect described herein, there may be provided a controller for a water heating system, wherein the controller is configured to determine a useable heat stored in the vessel in dependence on a target output temperature of a blending valve.

The water heating system may be as aforementioned. The controller may further be as aforementioned. The controller may be a retrofittable tank controller as aforementioned.

According to an aspect described herein, there may be provided a water heating system as aforementioned, further comprising a retrofittable tank controller or a controller as aforementioned.

The disclosure extends to any novel aspects or features described and/or illustrated herein.

Further features of the disclosure are characterized by the independent and dependent claims.

Any feature in one aspect of the disclosure may be applied to other aspects of the disclosure, in any appropriate combination. In particular, method aspects may be applied to apparatus or system aspects, and vice versa.

Furthermore, features implemented in hardware may be implemented in software, and vice versa. Any reference to software and hardware features herein should be construed accordingly.

Any system or apparatus feature as described herein may also be provided as a method feature, and vice versa. System and/or apparatus aspects described functionally (including means plus function features) may be expressed alternatively in terms of their corresponding structure, such as a suitably programmed processor and associated memory.

It should also be appreciated that particular combinations of the various features described and defined in any aspects of the disclosure can be implemented and/or supplied and/or used independently.

The disclosure also provides computer programs and computer program products comprising software code adapted, when executed on a data processing apparatus, to perform any of the methods and/or for embodying any of the apparatus and system features described herein, including any or all of the component steps of any method.

The disclosure also provides a computer or computing system (including networked or distributed systems) having an operating system which supports a computer program for carrying out any of the methods described herein and/or for embodying any of the apparatus or system features described herein.

The disclosure also provides a computer readable media having stored thereon any one or more of the computer programs aforesaid.

The disclosure also provides a signal carrying any one or more of the computer programs aforesaid.

The disclosure extends to methods and/or apparatus and/or systems as herein described with reference to the accompanying drawings.

Aspects and embodiments of the disclosure will now be described purely by way of example, with reference to the accompanying drawings.

**Brief description of the drawings**

Figure 1 illustrates a sensor according to an aspect of the invention.

Figure 2 illustrates an extensible sensor arrangement according to an aspect of the invention.

Figure 3 shows diagrams of exemplary waveforms propagating within the sensor.

Figure 4 shows a thermal cutout arrangement according to an aspect of the invention.

Figure 5 shows a diagram of a heating system in a first configuration.

Figure 6 shows a diagram of a heating system in a second configuration.

Figure 7 shows a diagram of an alternative heating system.

Figure 8 shows an example of a sensor.

Figure 9 shows an alternative sensor.

Figure 10 shows an example of a sensor in more detail.

Figure 11 shows typical temperature profiles in a tank with a gas boiler as heat source,

Figure 12 shows typical temperature profiles in a tank with a heat pump as heat source.

**Detailed description**

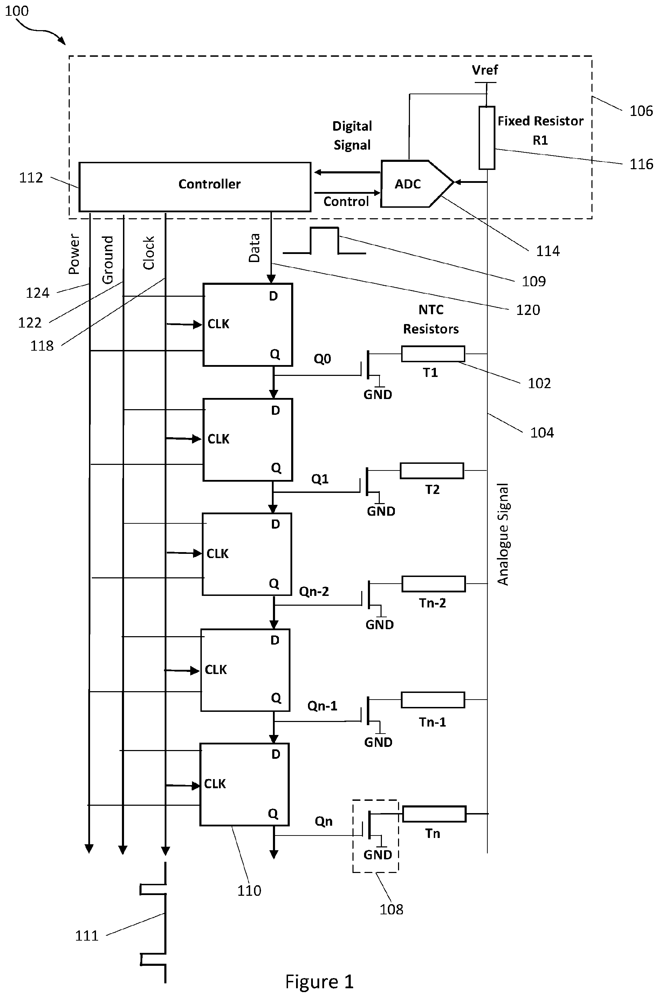

With reference to Figure 1, a circuit comprising a sensor 100 is illustrated which comprises an array of sensing elements 102. In this case a linear array of evenly spaced sensing elements 102 is shown. The sensing elements are configured to provide spatially separated temperature measurements, for example, along a height of a hot water tank.

The sensing elements 102 may be resistors which exhibit a positive or negative temperature coefficient, such as a thermistor. In the illustrated example, the sensing elements 102 are negative temperature coefficient (NTC) resistors.

A signal line 104 is connected to one side of each of the sensing elements 102. The signal line is a shared signal line 104 shared by each of the sensing elements 102. The signal line 104 is configured to carry a signal from the sensing elements 102 to a measurement module 106.

A switching element 108, such as a transistor, is connected to the other side (i.e. the side not connected to the signal line 104) of each of the sensing elements 102. The purpose of the switching element 108 is to provide a current path through any individual sensing element on a selective basis. That is, the switching elements 108 provide for individual addressability of the sensing elements 102, so each sensing element 102 can be read in turn. The switching elements 108 may be, for example, MOSFETs or bipolar transistors or any other suitable switch.

A latch 110 is provided connected to each switching element 108. An output of the latch 110 feeds into a control of the switching element, for example into the control input or gate of each switching element 108. The switching element 108 then selectively either completes a circuit path to through the switching element or breaks the circuit by connecting the switching element 108 to ground in dependence on the output of the latch 110.

A ground line 122 is provided for grounding components of the sensors. This may be a common ground line 122 shared between components. The ground line is shown in Figure 1 as shared between the latches, with individual paths to ground shown for the switching elements, for the sake of simplicity, but it will be understood the switching elements (and indeed any other components) may too be grounded via the common ground line 122.

The latches 110 are cascaded - that is, an output of the latch 110 feeds into the input of the next latch 110 in the array. The latches 110 may, for example be D flip-flops, set-reset latches, data or delay latches, toggle latches, T flip-flops or any other suitable latches. D flip-flops are preferred since they capture an input data pulse 109 at a definite portion of a clock cycle and output that captured value, the output value only changing when a new data pulse is captured. D flip-flops typically form the basis of a shift register. Figure 1 illustrates a single output from each latch which feeds in the subsequent latch. It will be appreciated that latches such as D flip-flops can have two outputs, to output a signal Q and its complement signal $\bar{Q}$, although the complement signal need not feed forward.

The latches 110 (for example, D flip-flops) are connected together to cascade a binary signal which in turn sequentially toggles the input of each switching element 108. The cascade of latches 110 may be configured to thus form a shift register. A data line 120 feeds the cascaded latches 110 which are in turn controlled by a common clock signal 111, as will be described in more detail below. The clock signal 111 may be fed to each of the latches by a clock line 118 shared by the latches 110. The latches may be powered and receive power from a common power line 124.

The measurement module 106 may take the signals received through the signal line 104 and translate these into measurement values. In the illustrated example, the measurement module 106 comprises a controller 112, an analogue to digital converter 114, and a fixed resistor 116.

The analogue to digital converter 114 is connected to the signal line 104 and reads the voltage across the voltage divider provided by the fixed resistor 116 and the presently selected sensing element 102. The analogue to digital converter 114 provides a digital signal embodying this information to the controller 112.

The controller 112 determines the resistance of the selected sensing elements 102 based on the information received from the analogue to digital converter 114. The controller 112 then determines the temperature based on the determined resistance.

The controller 112 may include a memory to store data received from the analogue to digital converter 114 or generated by the controller 112 itself. The controller 112 may further be configured to determine a temperature distribution in the hot water tank from the measured temperatures, as will be described in more detail below. The controller may be further configured to transmit data, by wired or wireless means, to a computing device or server for example for further processing, remote storage or for display to a user.

The controller 112 may also generate a clock signal 111 and generate the initial data pulse which is input to the array of latches 110 to initiate the sweep through the sensing elements 102. The controller 112 may also control the analogue to digital converter 114.

In one example, the sensor is integrated onto flexible strips, such as a strip of composite copper, polymer composite (e.g. Espanex or Kapton) and any of the aforementioned circuitry is available to be printed onto the flexible strip surface prior to etching in a ferric chloride bath. The circuitry comprising the sensor is arranged such that an adhesive layer is appended to the wall surface of the vessel, thereby allowing a layer of flexible polymer above the adhesive layer to be in thermal contact with the vessel wall. Above the flexible polymer layer, a layer of copper and/or printed circuit board trace is present with a layer of electrical components is provided above therein. It is therefore envisaged that sensors composed on flexible strips of adhesive tape may be manufactured by a continuous method of production.

By indexing through each sensing element, a set of signals can be provided to a measurement module 106 in order to determine a temperature distribution. Each signal from the sensing elements 102 carried on the signal line 104 can be used to determine a temperature at the location of the particular sensor. Within the measurement module 106, an interpolant function can be used to estimate intermediary temperature values so that calculus can be applied to accurately determine a temperature distribution of the tank as a function of height. The measurement module 106 can thus calculate, or permit to be calculated, useful information about the performance or status of the hot water tank, such as total energy content or the amount of useful hot water volume that is available to be drawn.

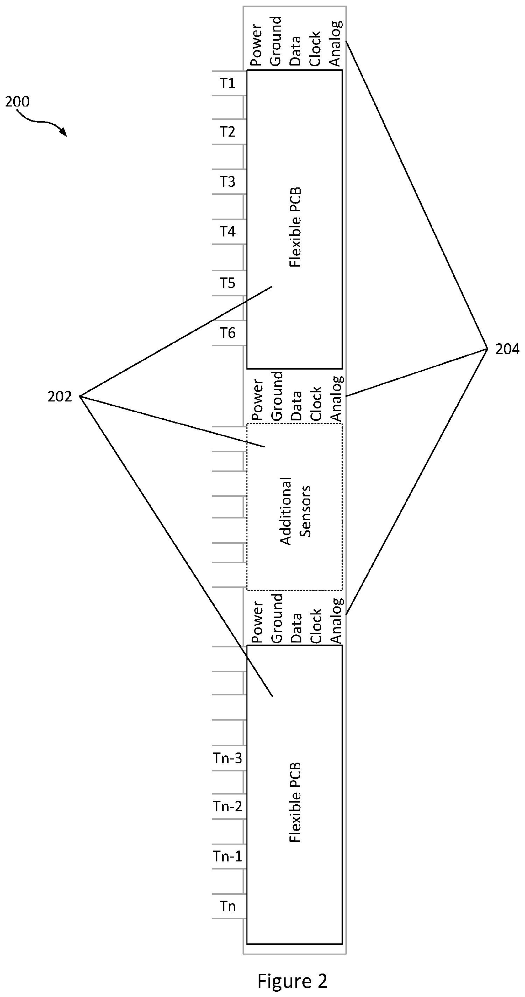

The sensor described above permits indexing sequentially between each switching element 108 without requiring an ever-increasing number of control lines 204 as the length of the sensor strip increases. The number of inputs at one side of the sensor, for example, the data input line to the first latch 110, the input to the clock line 118, the power line 124 to the latches 110 and/or other powered components, a first end of the ground line 122 to which the switching elements 108 may switch the sensing elements 102, and a first end of the signal line 104, is the same as the number of outputs at the other end of the sensor, for example the data output line from the final latch 110, the output of the clock line 118, the output of the power line 124, a second end of the ground line 122, and a second end of the signal line 104. This permits multiple sensors to be connected together (i.e. the inputs of one sensor are connected to the outputs of another sensor) to provide an extended sensor arrangement 200, as illustrated in Figure 2.

By connecting an arbitrary number of the above-described sensors together, a sensor arrangement 200 of arbitrary length can be arrived at without needing to increase the number of lines 204, or make any commensurate increase in width of the sensors to accommodate additional control as the sensor arrangement 200 is extended. The present disclosure therefore provides a particularly simple sensor and sensor arrangement 200 for use with vessels of different size. Only one measurement module 106 is required for a sensor arrangement 200 of arbitrary length since input to the later sensors in the arrangement can be provided by connection to the outputs of the previous sensor to which it is connected. The outputs of one sensor may be soldered to the corresponding inputs of a next sensor in order to provide the extended sensor arrangement 200.

Figure 2 shows a sensor arrangement 200 as it might appear on an arbitrarily long flexible strip. In practice a complete strip will comprise multiple segments 202, typically each a separately manufactured flexible PCB comprising a sensor as described above, which have been soldered together.

The strips on which the sensors are provided may be printed circuit board and are preferably flexible PCBs suitable for affixing to the outside of a hot water tank.

A sensor arrangement 200 may be formed of any number of individual temperature sensing elements 102, or segments 202 comprising one or more sensing elements 102, with only a limited number of lines 204 that does not grow as the length of the strip, or number of segments 202 used, increases. Preferably fewer than ten lines 204, more preferable fewer than eight lines 204 and in the illustrated embodiment only five lines 204 are required as input to each strip and as output from each strip as illustrated: a power line 124, a ground line 122, a data line 120, a clock line 118 and a signal line 104. This allows multiple strips to be connected to form a single sensor of arbitrary length without the need to provide increasing numbers of lines 204.

Typically, the length of a single sensor or segment 202 of the arrangement will be limited by the fabrication methods available. Each segment 202 may be between around 50mm to 1000mm long, preferably between 100mm and 750mm long and yet more preferable between 200mm and 300mm long. By reducing the number of tracks to only 5 signals, the amount of work involved when soldering the segments 202 together when compared to an alternate scheme where every individual element has its own analogue going back to a measurement module 106 is significantly reduced, permitting simpler and cheaper installation of the sensors. The length of the sensor arrangement 200 can be easily changed to fit the size of the vessel.

As well as being configured to couple of other similar sensors, each sensor might also be cut to length - which provides further flexibility, for example if the desired length of the sensor arrangement 200 is not an exact multiple of the length of each individual sensor or segment.

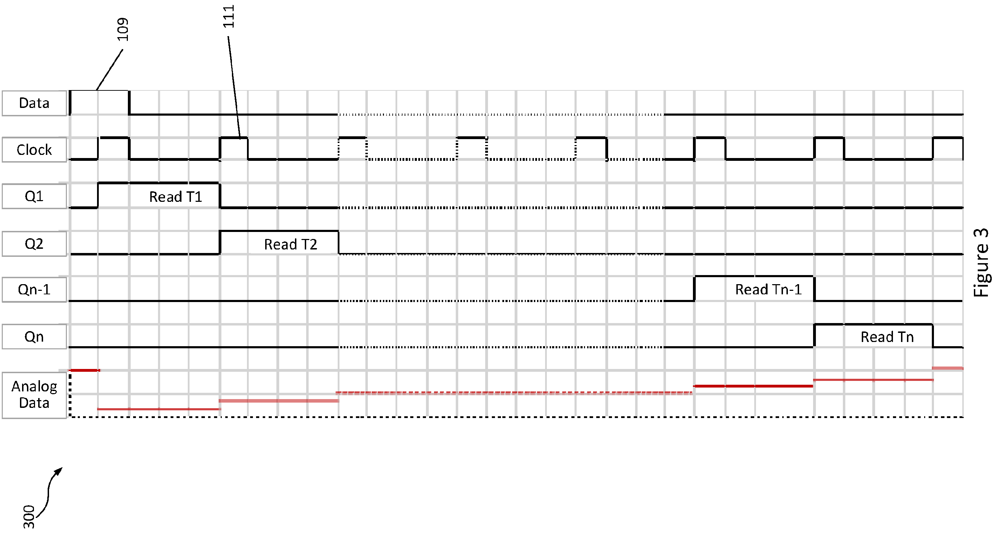

Figure 3 shows an exemplary pattern of waveforms that might propagate through a sensor of N sensing elements 102 (which may comprise either a single segment 202 or multiple segments 202 ).

In an initial state, the latches 110 are all in a 0-binary state. An initial data pulse which comprises a single toggling event (e.g. a square wave) and which overlaps the leading edge of the first pulse of a clock signal 111 initiates the process. It will be appreciated that the falling edge of the clock signal 111 may also initiate the process. The initial data pulse is generated by the controller 112 is received by the input data channel of the first latch 110 in the array. This causes the latch 110 of the first switching element 108 to go into a 1 binary state which persists until the second clock cycle.

The centre of the initial data pulse may be aligned with the rising edge of the clock signal 111. Each rising edge of the clock signal 111 then selects the next sensing element. This may have the advantage of keeping the clock rate low in order to minimise electromagnetic radiation. Again, either the rising or falling edge may be used at each sensing element, although typically the same edge (either rising or falling) will be used for each sensing element.

The second clock cycle toggles the second latch 110 output to a 1 binary state whilst simultaneously resetting the first latch 110. This process continues so that the latch 110 outputs each display a binary 1 value in sequential order. Meanwhile, the analogue line starts out at the supply voltage level since none of the switching elements 108 are activated and so the voltage divider is in a high state. On commencement of the measurement process with the initial data pulse, the analogue voltage value steps according to the sensing element resistance value through which a current path is provided via each corresponding switching element 108 when activated by its associated latch output. The measurement module 106 samples the analogue output during the process to provide an array of sensor output values.

The measurement module 106 may determine the number of sensing elements 102 in the sensor arrangement 200 automatically. Since the temperature of a stratified hot water vessel is likely to be highest at the top of the vessel (corresponding to one end of the array) and the lowest at the bottom of the vessel (corresponding to the other end of the array). The temperature is also likely to monotonically rise from the bottom to the top of the vessel (although this may depend on the position of the heating element). The measurement module 106 can thus determine the number of sensors in the array based on where there is a large jump from a high temperature (at the top of the tank) to a low temperature (at the bottom of the tank) and thus identify the sensing elements 102 corresponding to the top and bottom of the sensor arrangement 200. This may permit simpler installation of the sensing arrangement since is reduces the need to calibrate or programme the measurement module 106 manually in dependence on the number of segments 202 chosen for that sensing arrangement. The measurement module 106, knowing the first and last elements in the array, may also determine the position of each sensing element in the array. By determining the number of sensing elements in the sensor, the measurement module may also determine the identity of the tank.

In a variant one of the sensing elements is replaced with a fixed resistor that provides an identifier of the tank to the measurement module (and thus the measurement module might be configured for different tanks). By identifying the tank, a more accurate picture of the temperature distribution of the tank and associated information may be calculated, for example, identifying a tank may permit the shape, width, volume or other characteristics of the tank to be factored into calculation of stored energy or the like.

In the case of a stratified temperature distribution, it is advantageous to provide a continuous interpolant function which can provide a continuous estimate of temperature values between the individual temperature measurements. Considering a linear dimension, x, down the vertical extent of the sensor or sensor arrangement 200, a hypothesis function can be determined which can then become an interpolant through application of a gradient descent algorithm. This is a typical technique to fit mathematical functions to datasets with an underlying physical model which will be understood by one skilled in the art. In the case of a stratified temperature distribution, an analytical solution to the heat equation may yield an equation with the following form:

$$T(x) = \frac{T_s - T_m}{2}\left[1 + \text{erf}\left(\frac{\frac{x}{L} - a}{b}\right)\right] + T_m + c$$

Where x is the linear position anywhere along the length of the sensor or sensor arrangement 200; Ts is the temperature of the bottom of the top of the strip; Tm is the temperature at the top of the strip and L is the total strip length. This particular solution involves the error function erf along with three coefficients of best fit: a, b and c, which can be iterated through application of the gradient descent algorithm to achieve best fit to the individual temperature measurements. This approach has a number of advantages, for example, an interpolant provides a good physical representation of a stratified temperature distribution and is therefore likely to provide the highest accuracy for the fewest number of discrete heating elements, and if any individual sensing element fails or experiences noise, the resulting error will be lower in comparison with spline or other classical interpolant function methods.

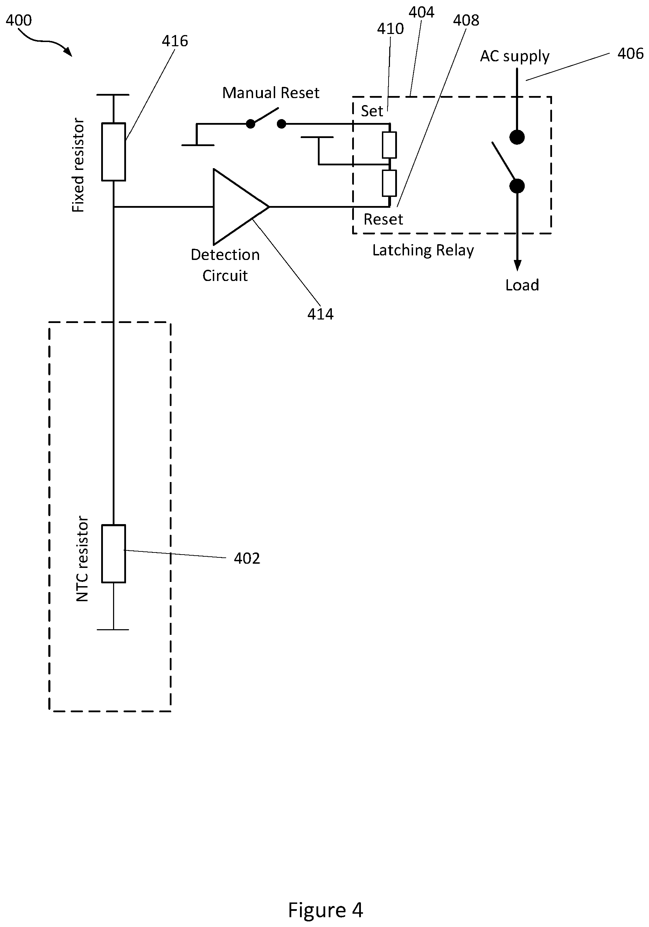

A further feature of a sensing arrangement which may be provided in combination with, or independently from, the above-described sensing arrangement is shown in Figure 4. A high limit thermal cutout 400 comprising a sensing element 402, in this case an NTC resistor, is fixed to the outside of the water vessel. A high limit thermal cutout is provided primarily as a safety device to cut off power to a heating element when a threshold temperature (for example, corresponding to a dangerously hot temperature of water, or unsafe operating temperature of the vessel) is reached. Traditionally, thermal cutouts for hot water tanks are metal tube arrangements which are expensive and result in undesirable heat losses from the tank.

As illustrated in Figure 4, the thermal cutout 400 described herein comprises a latching relay 404 which is used to switch on or off the supply of power 406 to a heating element of the vessel. The latching relay 404 maintains its state when power is removed. A pulse on the reset pin 408 prompts the relay to move to an open configuration, i.e. one in which a circuit is broken to prevent the delivery of power to the heating element. A pulse on the set pin 410 prompts the relay to move to a closed configuration, i.e. one in which a circuit is completed to allow the delivery of power to the heating element. The open configuration is illustrated in Figure 4. The latching relay 404 will maintain its present configuration (either open or closed) in the absence of a pulse on either set 410 or reset 408 pins, even in the event of a power cycle.

As illustrated, a detector may be provided connected to the latching relay. In particular, a detection circuit 414 is provided connected to the reset pin 408 of the latching relay 404. In detection of a particular temperature condition, for example a temperature in excess of a particular threshold, the detection circuit 412 generates a pulse to the reset pin 408 of the latching relay 404.

A sensing element 402 is mounted at a suitable location on the hot water tank vessel. The sensing element is connected the detection circuit 412. The sensing element 402 may be connected to a fixed resistor 416 in order to provide a voltage divider. The detection circuit 412 may be configured to detect a change in voltage or resistance across the potential divider in order to detect the temperature condition. When the temperature rises above a set threshold, the detection circuit 412 generates a pulse on the reset pin 408 of the relay causing it to open. The relay stays open until the manual reset switch is pressed which generates a pulse on the set pin of the relay causing it to close.

It will be appreciated that the thermal cutout may be provided as a part of the sensor or sensor arrangements 200 herein described. For example, the connection from the sensing element 402 of the thermal cutout to the fixed resistor 116 416 may be the same as that of the sensing arrangement for determining the temperature distribution. The sensing element 402 of the thermal cutout may similarly be provided connected to a switching element 108 and a corresponding latch, which may be connected to the cascade of latches 110 of the sensing arrangement.

The detection circuit 412 and latching relay 404 may thus be provided as part of, or as additional components of, the measurement module 106 of the sensing arrangement.

It will be understood that the present invention has been described above purely by way of example, and modifications of detail can be made within the scope of the invention.

It is described above how the measurement module may determine the number of sensing elements in the sensor, and the advantages this can afford. Determining the number of sensing elements in the sensor can be useful for sensors more generally, not only for the specific sensor described above. This is now described in more depth for a sensor formed of an array of sensing elements more generally.

For many purposes it can be useful to be able to measure or infer the state of charge of a hot water tank. For example, domestic hot water tanks heated electrically via an immersion heating element or heat pump provide a significant opportunity to electrical power grids for the purposes of absorbing surplus energy, in particular renewable energy such as solar PV and wind that can depend on weather and other factors outside the control of energy providers. Alternatively, during periods of high demand relative to power supply, hot water tank controllers can potentially defer using electrical power in order to provide a respite to the grid at a moment in time beyond which more generation is available in future to satisfy domestic hot water production requirements.

In determining whether an individual hot water tank is able to defer heating or absorb heat, e.g. to make sensible use of an electrical power grid surplus, it is useful to be able to measure or infer the state of charge of the hot water tank. As used herein, a state of charge, preferably means: 'how much thermal energy is there in a tank, and how much of that energy is usable, that is, available for the production of hot water above a useable temperature?' Knowing the state of charge of the tank, along with the historic profile of hot water consumption, allows a control system to determine whether or not a surplus or deficit in generation can be accommodated in the heating strategy over a given time period.

One approach for controlling a hot water tank in dependence on electrical power grid performance can be achieved with some form of connectivity for a central controller connected to 100s or 1000s of tanks. Another approach involves a fairly sophisticated local controller to allow individual systems to decide whether or not to respond to a market price signal or a local power grid measurement, in which case the system requires suitable devices for monitoring grid data, e.g. connectivity devices, or grid sensing hardware. Such a local controller adds cost.

Conventional hot water tanks can operate without a connected electronics platform. For example, a conventional electrically heated hot water tank is able to operate with a simple, mechanical thermostat in conjunction with a resistive immersion element. A conventional gas or heat-pump heated hot water tank may have a coil inside the tank with a pocket to accommodate a water temperature sensor connected to an outboard heat pump or gas boiler without any additional electronics or connectivity.

Conventional hot water tanks are fixed appliances which are typically installed for 10 to 20 years or more. Over that time frame, the primary heating source may change where the system is heated externally. In addition, as energy grids decarbonise, many conventional hot water tanks installed today may have a dormant back-up electric heating element. In future a gas boiler may be decommissioned and the back-up electric heating element becomes the primary heat source exploiting lower carbon electricity. Unfortunately such a conventional system may be unable to provide much demand side flexibility to the grid as there is no simple way to measure or infer the state of charge without cumbersome retrofitting of an array of sensing elements.

The inventors have recognised that it can be advantageous for a conventional tank to be fitted with a state of charge sensor which can be connected at any point of time during the lifetime of the tank to a separate controller for advanced control depending on the state of charge of the tank (e.g. for grid-dependent control). Conventionally when an array of sensing elements is retrofitted to a tank the specifics of the sensor and the tank are known and can be provided to the controller at the time of the retrofit. By contrast in a tank pre-fitted with an array of sensing elements the specifics may no longer be evident or readily available.

It is therefore advantageous for the sensor to provide, on connecting the separate controller, identifying information to the controller about the tank and the sensor such as:

- a number of sensing elements in the sensor
- a length of the array of sensing elements
- a position of each sensing element in the array
- a tank volume, e.g. based on a length of the sensor
- a tank characteristic such as a footprint
- a number of electric heating elements
- whether the tank works with a gas boiler

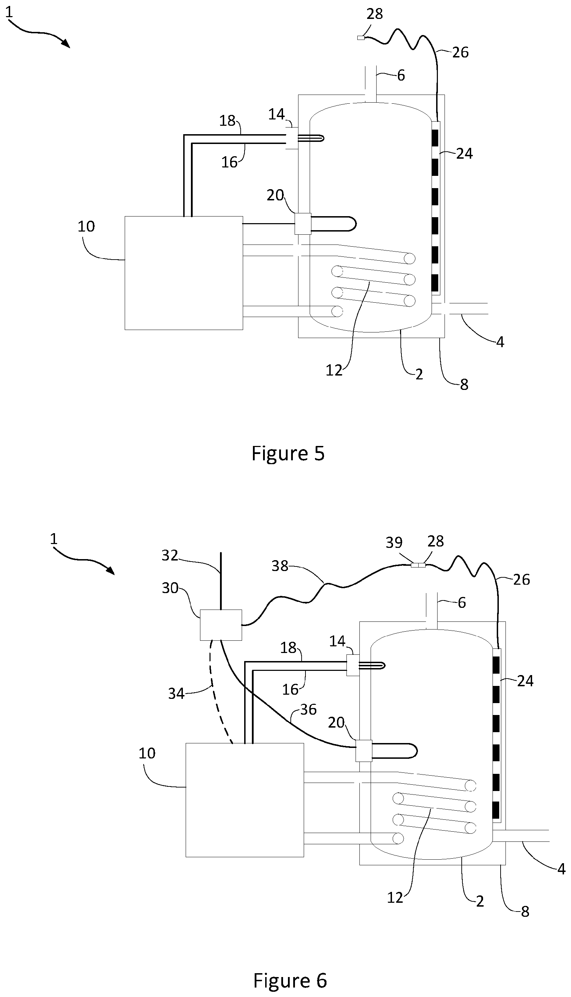

Figures 5 and 6 show a water heating system 1 comprising a vessel or tank 2 with a sensor 24 installed ready for use with a retrofittable tank controller 30. Figure 5 shows the water heating system 1 prior to installation of a retrofittable tank controller 30. Figure 6 shows the water heating system 1 after installation of a retrofittable tank controller 30.

The tank 2 has a cold water inlet 4 towards the bottom of the tank for drawings in cold water from the main supply and a hot water outlet 6 arranged towards the top of the tank for drawing off hot water for use.

The illustrated water heating system 1 has two heat sources for heating water in the tank 2. One of the heat sources is a gas boiler 10 which delivers heat to water in the tank via a heat exchanger, in this case a coil 12 disposed in the lower portion of the tank. The second heat source is an electrical heating element 20 arranged to directly heat the water in the tank. The electrical heating element 20 is arranged above the coil 12 in the tank.

In the illustrated example a mechanical thermostat 14 is provided in an upper portion of the tank. The mechanical thermostat is configured to sense the temperature of water in the tank and a switched live signal is transmitted from the thermostat to the gas boiler 10 via the switched live return portion of the switched live circuit 16, 18 to sense whether the water temperature is too high or too low so that the gas boiler may act accordingly. The mechanical thermostat may have a non-resettable high limit.

A sensor 24 is provided with the tank for sensing a plurality of temperatures of the tank. Operation of the heating system 1 can be achieved without using the sensor 24, as illustrated in Figure 5. In this configuration the sensor is dormant and not in use, for instance during an initial phase of the water heating system's use. The sensor is configured to connect to a retrofittable tank controller 30 which may be added to the water heating system at a later date.

The sensor 24 comprises a plurality of temperature sensing elements arranged along the height of the tank. It will be appreciated that the sensor may comprise fewer or more temperature sensing elements, or that the temperature sensing elements may be arranged otherwise than illustrated.

The individual temperature sensing elements of the sensor 24 may for example include thermistors (also known as resistance temperature detectors) such as positive temperature coefficient thermistors, thermocouples or temperature sensing ICs (integrated circuits). The sensing elements may be located outside the tank, e.g. on or near the tank wall, as illustrated in Figure 5. In another example the sensing elements are each located within individual pockets protruding into the tank. In this example a number of apertures are provided along the tank wall, with pockets that protrude into the tank for receiving the sensing elements. Pockets can be attached to the tank wall e.g. by welding or with threaded couplings. The ports may include threaded fittings for mounting a sensing element into a pocket. In another example an aperture is provided at or near the top of the tank, and the assembly of sensing elements is provided depending from the top of the tank into the tank interior, optionally in a protective sheath.

In an example sensing elements are provided such that they are spaced at regular intervals of around 10 cm along the height of the tank. A greater spacing between the bottom of the tank and the lowest sensing element and a smaller spacing between the top of the tank and the uppermost sensing element may be selected. A wide variety of other spacings may be selected, be it closer together, farther apart, with more or less regular intervals. In an example the electrical heating element 20 is arranged around mid-height of the tank, but other arrangements are suitable too.

The sensor may comprise a plurality of individual temperature sensing elements affixed to a flexible circuit on board an adhesive tape referred to as a 'sensing strip'. The sensor may be formed of a linear array of sensing elements which are addressable through a series of clocked shift registers as discussed above.

In the illustrated example the sensor 24 is provided with a flying lead 26 which may be used to connect the retrofittable tank controller in order for signals to be provided from the sensor 24 to the retrofittable tank controller 30.

The sensor 24 can have a connector 28 on one end which mates with a corresponding connecter 39 on the end of a flying lead 38 or connecting cable from the retrofittable tank controller 30. In the illustrated example the flying lead 38 is not easily removable from the sensor 24 and they form an integral part, but in other examples the sensor 24 merely provides a connector at the end of the array of sensing elements, for instance on or next to a sensing strip, without a flying lead between the connector and the sensing elements. In this variant a suitable cable with a mating connector can be attached to or removed from the connector at the end of the array of sensing elements for connection to the retrofittable tank controller 30.

In Figure 6 the water heating system 1 is shown in a configuration with a retrofittable tank controller 30. The retrofittable tank controller 30 is shown with an input 32 for receiving data for more sophisticated control, e.g. concerning state of a power source such as electrical grid. In the illustrated example the retrofittable tank controller 30 has a mating connector 39 for connecting to the connector 28 at the end of the flying lead 26 attached to the sensor 24. The retrofittable tank controller 30 may further be connected to the electric heater 20 by an electric heater control line 36. The retrofittable tank controller 30 may also be connected to the gas boiler 10 by a gas boiler control line 34. These control lines can be installed when retrofitting the tank controller 30, and can permit the controller to control operation of the gas boiler 10 and the electric heater 20, in addition to the switched live circuit 16, 18 permitting the gas boiler to act in response to the mechanical thermostat 14.

The controller 30 is configured to identify characteristics of the water heating system from the sensor, in particular characteristics of the sensor and the tank. These characteristics can be used for determining the state of charge, that is, a quantity of useable heat stored in the vessel, that is, heat above a useable temperature threshold.

The characteristics may be available to the controller by virtue of operation of the sensor (e.g. the number of sensing elements in an array), and/or they may be made available to the controller by way of an identifier that is part of the water heating system. The identifier may form part of the sensor. The identifier may provide the controller with the one or more characteristics of the tank, such as the tank's size, the number of temperature sensing elements in the sensor, whether the tank works with a gas boiler etc.; or the identifier may encode these characteristics for lookup by the controller.

In some examples the identifier may comprise a machine readable label such as barcode or QR code or another visual identifier. Such an identifier may be affixed to the tank. During installation of the controller the installer can, e.g. via an installer commissioning app, scan the machine readable label for providing to the controller.

In some examples the identifier may comprise a human readable label that permits the installer to enter manually, e.g. via an installer commissioning app, information to provide tank characteristics to the controller. Some characteristics of the water heating system - e.g. currently operational heat sources - may be provided to the controller otherwise, e.g. by an installer configuring the controller.

In some examples the sensor includes an electrical component that encodes a characteristic of the water heating system, such as a tank characteristic (e.g. tank volume, tank footprint, tank height, sensing element spacing). The encoding can be simply by selection of a parameter such as fixed resistance in a series of clocked shift registers, or it can involve more sophisticated electrical componentry such as an electrically erasable programmable read-only memory (EEPROM).

In an example, the sensor comprises an array of sensing elements as described in detail above, and further includes an encoding element, e.g. at an end of the array for installation at the base of a tank. The encoding element is arranged in the topology similar as a sensing elements except in that a fixed value resistor takes the place of the element having a temperature-dependent parameter. A certain fixed value resistor can be used to encode for example a slimline type tank, another fixed value resistor can be used to encode for example a standard type tank; the tank diameter can then be looked up based on the determined tank height. In another example a certain fixed value resistor can be used to encode for example a certain tank diameter. Many other topologies can be used to include an electrical component that encodes a characteristic of the water heating system, whether or not incorporated with the sensor. For instance a separate circuit with its own tracks and connections can be included, and probing of that separate circuit can permit the controller to determine the encoded characteristics of the water heating system.

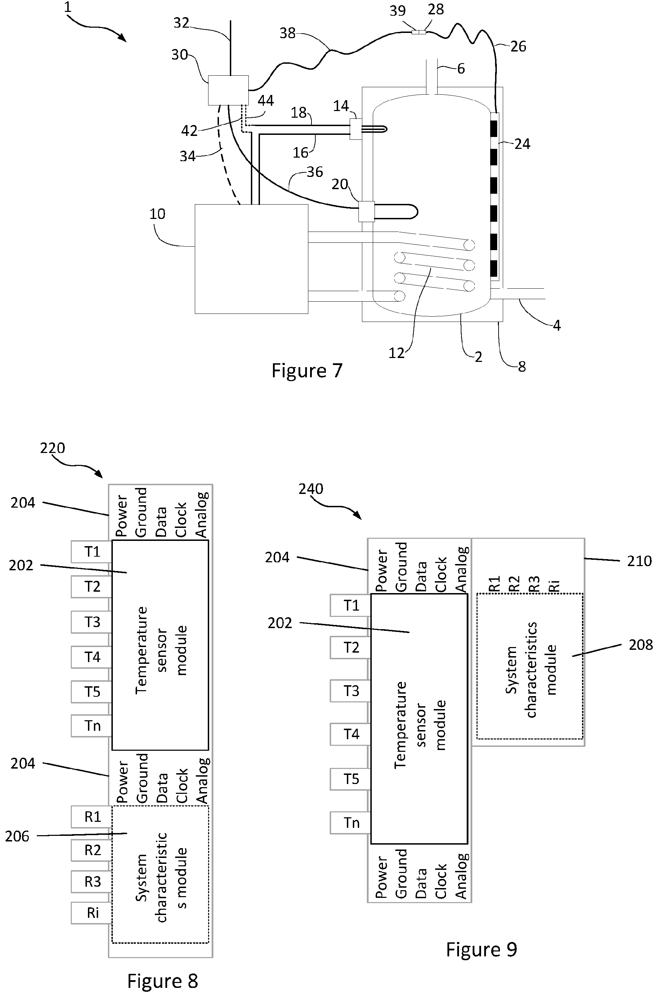

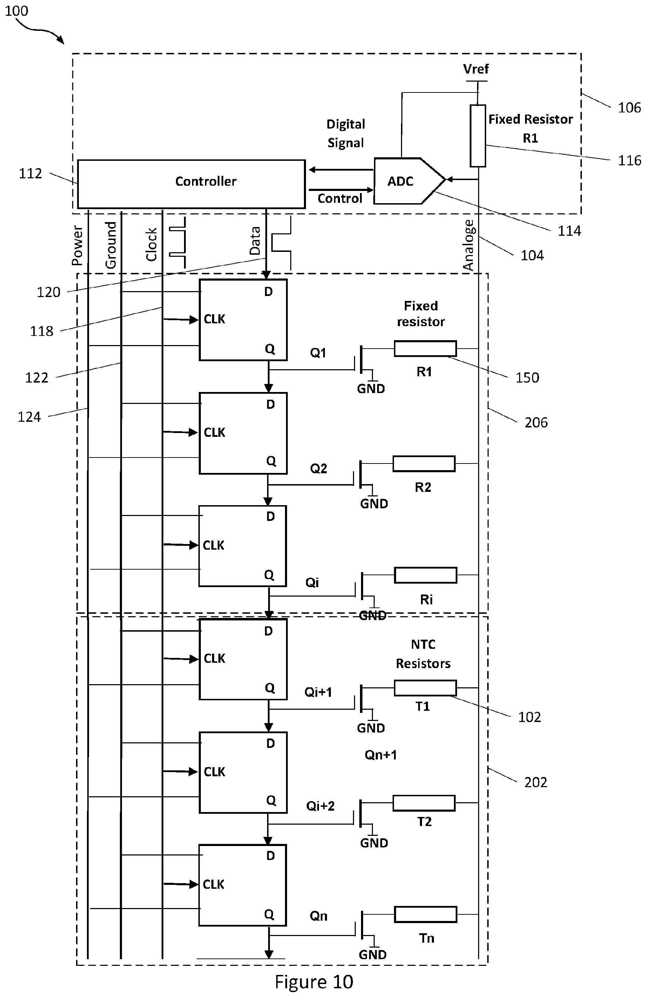

Figure 8 shows an example where the sensor 220 includes a temperature sensor module 202 as described above with reference to Figure 1, and a system characteristics module 206 as illustrated in more detail in Figure 10. In the system characteristics module 206 a number of fixed value resistors 150 R1 to Ri can be used to encode a tank characteristic. Figure 9 shows an example where the sensor 240 includes a temperature sensor module 202 as described above with reference to Figure 1, and a system characteristics module 208 with a separate set of outputs. In the illustrated example the system characteristics module 208 has a topography such that at each of the output lines 210 a readout can be obtained that encodes a tank characteristic (e.g. resistances R1, R2, R3, ... Ri). The system characteristics module 208 may instead use the same topography as the system characteristics module 206 as illustrated in more detail in Figure 10, with a series of clocked shift registers; in this case the output lines are same as described above (power, ground, data, clock, analog). For the sensor a wide variety of circuit topographies can be used generally.

In the example illustrated in Figure 6 a mechanical thermostat 14 provides a signal to the boiler 10 to indicate if the water temperature is too high or too low. Figure 7 shows an alternative arrangement where additional connections 42, 44 are provided to connect the controller 30 in series into the switched live circuit with the mechanical thermostat 14 and the boiler 10. This can permit the retrofittable tank controller 30 to turn the boiler on and off whilst making use of the safety high limit protection already in place.

The location of the sensing elements (e.g. at single fixed points or within an extensible, flexible strip) relative to the tank and locations of thermal inputs to the tank can have a bearing on the accuracy of the state of charge measurement. The relative location of heating inputs or indeed the sensor location itself can be subject to manufacturing tolerances. Consequently a self calibration routine may be included. Self-calibration can permit identification of relevant information for control such as when the tank is fully charged, and/or a sensor location which corresponds to the lowest heating input location. For example, if an individual sensing element happens to be located higher than an assumed model then it may consistently record a temperature higher than a theoretical temperature profile model would predict for its assumed location, and accordingly the estimated state of charge may become inaccurate. Self-calibration can permit the controller to find a more accurate reference for estimating the state of charge. Self-calibration can permit the controller to determine a maximum useable heat capacity of the water heating system, that is, how much heat the system can safely accept and store, and how much of that heat is actually useable or at or above a useable temperature threshold.

In an example, the self-calibration routine involves applying heat to the tank (without any water being drawn) until a state of maximum heat storage, also referred to as a 'fully charged' state, is reached. The measured temperature profiles can permit determination of a 'fully charged' reference.

A tank may be considered 'fully charged' once a certain temperature is achieved at a certain level, e.g. at or near or marginally below the top of the tank, to prevent overheating. In another example a tank is considered 'fully charged' once a certain temperature (e.g. a useful temperature) is achieved at or near or marginally higher than the level of the lowest thermal input, to ensure a high proportion of the tank has been heated. In some examples this may involve applying heat for a maximum period of time, after which further transfer of heat can become ineffective (e.g. for heat sources providing relatively low temperature heat inputs).

Some sensing elements may be located lower than the lowest heat input, and as at that level only marginal heating may be achieved, data from those sensors may be disregarded for determining the state of charge. This can ensure that the relative state of charge - e.g. 40% maximum heat capacity - reflects the actually heatable volume in the tank, without including the proportion that may not be effectively heatable.

For determining the state of charge the data from the different sensing elements may be smoothed, e.g. with moving averages, so that the data from a number of neighbouring sensing elements is considered rather than each sensing element individually.

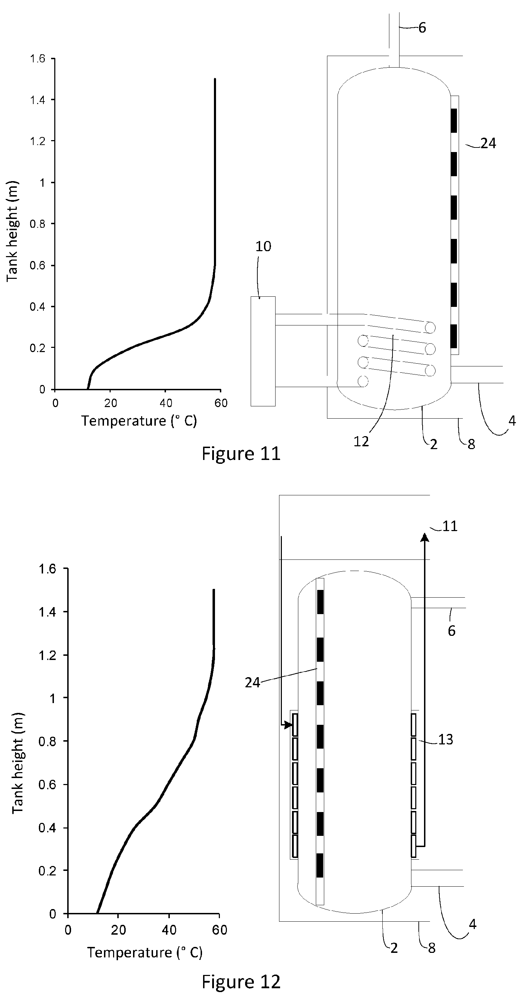

The self-calibration routine may include analysis of the temperature profile in order to identify the heat source. For example heat pumps often provide heat at a lower temperature, which can result in a more sloped temperature profile than for instance with a gas boiler. Figure 11 shows typical temperature profile in a tank with a gas boiler 10 as heat source. Figure 12 shows typical temperature profile in a tank with a heat pump 11 as heat source and a condenser 13 wrapped around the outside the tank 2 for heat transfer to the tank. A tank with a two or more heat inputs at different locations can also be identified by way of the temperature profile.

In a variant of the water heating system 1 a blending valve is provided at the hot water outlet 6. Such a blending valve typically has a target output temperature according to which water is blended. The controller may be adapted to receive an indication of the target output temperature used in the blending valve, e.g. directly from the blending valve by way of a suitable connection, or via installer input when the controller is configured. The controller can then select the threshold temperature (i.e. the temperature above which heated water is considered useful, also referred to herein as the 'useful temperature') for determining the state of charge to correspond to the target output temperature for the blending valve. This is particularly convenient as it can harmonise the performance of the tank with the requirements of the blending valve and the calculated state of charge accurately reflects the quantity of useful heat stored in the tank.

The invention may include one or more of following features in suitable combinations:

- A hot water tank which is capable of operating with a mechanical thermostat, internal electric heat source and/or external heat source without embedded electronics which has been pre-fitted with a state of charge sensor which can in future retrofitted to a DSR controller
- A retrofittable tank controller which can be fitted to a hot water tank with a pre-fitted state of charge sensor and in turn control an internal electric heat source or external heat source whilst optimising the time of heating with respect to measured usage behaviour and an energy price signal
- the state of charge sensor comprises a plurality of temperature sensing elements inserted into pockets within the tank

- the state of charge sensor comprises a plurality of temperature sensing elements arranged linearly along a flexible circuit which adheres to the tank wall via an adhesive tape
- a sensor as described above
- self identification on the basis of the strip (how big the tank is, what heat sources does it have etc, how long is the strip)
- self identification is determined by a preset resistor value on the strip which maps to the tank's technical characteristic
- self identification is determined by a programmable EEPROM chip which is programmed with the tank's identifying characteristics which are subsequently read off from the DSR controller when fitted to the tank in future
- a self calibration routine is provided for in order to ensure that the location of the sensing elements relative to the tank shell and heat input locations are factored in
- the or a self calibration routine involves heating the tank from cold to fully hot where an upper temperature measurement made above the highest heat source input location is used to determine the upper temperature reference used to determine the tank's 'full charge level' against a temperature distribution sensed by the remaining sensing elements
- the or a calibration can be undertaken through remote inspection and interrogation of the temperature profile relative to the reported state of charge value
- a system including additional cables to pass a boiler switched live cable through the existing high limit over temperature thermostat to both control the boiler and make use of the existing mechanical protective thermostat

The present disclosure also features the following numbered clauses:

1. A water heating system comprising:

a vessel for holding water and for receiving heat from one or more heat sources for heating water in the vessel;
a sensor comprising a plurality of temperature sensing elements for sensing a distribution of temperatures in the vessel;
a connector for connecting the sensor to a retrofittable tank controller; and
wherein the water heating system is configured to provide one or more characteristics of the water heating system to a retrofittable tank controller such that a retrofittable tank controller connected to the sensor and in receipt of the characteristics of the water heating system can determine from the distribution of temperatures in the vessel a quantity of useable heat stored in the vessel.

2. A water heating system according to Clause 1, wherein the sensor is configured to provide one or more characteristics of the water heating system to a retrofittable tank controller.

3. A water heating system according to Clause 1 or 2, wherein the water heating system, preferably the sensor, comprises one or more fixed value resistors encoding one or more characteristics of the water heating system.

4. A water heating system according to any preceding clause, wherein the water heating system, preferably the sensor, comprises an EEPROM programmed with the one or more characteristics of the water heating system.

5. A water heating system according to any preceding clause comprising a visual identifier, preferably a QR code or a barcode, configured to encode one or more characteristics of the water heating system.

6. A water heating system according to any preceding clause, wherein the one or more characteristics comprise one or more of: a characteristic of the vessel; a volume of the vessel; a height of the vessel; a diameter or width of the vessel; an indication of a footprint of a vessel; a manufacturer of the vessel; an identity of the vessel; a shape of the vessel; a characteristic of the one or more heat sources; a number of heat sources; a type or types of the heat sources; a characteristic of the sensor; a number of temperature sensing elements of the sensor; a length of the sensor; a spacing between temperature sensing elements of the sensor.

7. A water heating system according to any preceding clause, wherein the sensor is configured to provide a height of the vessel or a number of temperature sensing elements of the sensor or a length of the sensor or a vessel volume based on a length of the sensor to a retrofittable tank controller.

8. A water heating system according to Clause 7, wherein the sensor or another means is configured to provide an indication of a footprint of the vessel and optionally a characteristic of the one or more heat sources to a retrofittable tank controller.

9. A water heating system according to any preceding clause comprising a mechanical thermostat with a non-resettable high limit for controlling one or more heat sources for heating water in the vessel in a configuration without a retrofittable tank controller.

10. A water heating system according to any preceding clause comprising one or more heat sources for heating water in the vessel, optionally one or more of: an electric heater disposed in the vessel; a gas boiler; a heat pump; a solar thermal device; and a solar photovoltaic device.

11. A water heating system according to Clause 10 when dependent on Clause 9, wherein the one or more heat sources is configured to provide heat to the vessel in dependence on the mechanical thermostat.

12. A water heating system according to Clause 11, wherein a connection between the one or more heat sources and the mechanical thermostat comprises a node for connection of a retrofittable tank controller.

13. A water heating system according to any preceding clause, wherein the sensor comprises one or more of: a flexible substrate; a flexible circuit; an adhesive layer for attachment of the sensor to the vessel; and a flexible printed circuit board.

14. A water heating system according to any preceding clause, wherein the sensor comprises an array of sensing elements, each element having a temperature-dependent parameter; a cascaded array of latches, each latch being configured to control a switching element corresponding to a one of the sensing elements thereby to selectively provide a current path to the one of the sensing elements; a signal line to which each of the sensing elements is electrically connected for providing a signal to a measurement module.

15. A retrofittable tank controller for controlling a water heating system preferably according to any one of Clauses 1 to 14, the controller comprising:

a connector for connecting the retrofittable tank controller to a sensor of the water heating system, the sensor comprising a plurality of temperature sensing elements for sensing a distribution of temperatures in a vessel;
a determination module for determining a maximum useable heat capacity of the water heating system in dependence on one or more characteristics of the water heating system received from the water heating system; and
a controller module configured to control one or more heat sources in dependence on a useable heat stored in the vessel and a maximum useable heat capacity of the water heating system.

16. A retrofittable tank controller according to Clause 15, wherein determining a maximum useable heat capacity of the water heating system comprises performing a self-calibration routine including: providing heat to the vessel until a maximum heated state is reached; and determining a distribution of temperatures in the vessel in the maximum heated state; and optionally using the distribution of temperatures in the vessel in the maximum heated state as a reference for a useable heat stored in the vessel.

17. A retrofittable tank controller according to Clause 15 or 16, wherein the retrofittable tank controller is configured to determine a useable heat stored in the vessel in dependence on signals received from the sensor.

18. A retrofittable tank controller according to any of Clauses 15 to 17, wherein the retrofittable tank controller is configured to control the one or more heat sources in dependence on an energy availability measure, preferably a grid stress indicator, a power pricing signal, and/or a weather forecast.

19. A retrofittable tank controller according to any of Clauses 15 to 18, wherein the retrofittable tank controller is configured to determine a useable heat stored in the vessel in dependence on a target output temperature of a blending valve.

20. A controller for a water heating system preferably according to any of Clauses 1 to 14, wherein the controller is configured to determine a maximum useable heat capacity of a water heating system and configured to perform a self-calibration routine including: providing heat to a vessel holding water until a maximum heated state is reached; and determining a distribution of temperatures in the vessel in the maximum heated state; and optionally using the distribution of temperatures in the vessel in the maximum heated state as a reference for a useable heat stored in the vessel.

21. A controller for a water heating system preferably according to any of Clauses 1 to 14, wherein the controller is configured to determine a useable heat stored in the vessel in dependence on a target output temperature of a blending valve.

22. A water heating system according to any one of clauses 1 to 14, further comprising a retrofittable tank controller or a controller according to any one of Clauses 15 to 21.

23. A sensor for measuring a temperature distribution of fluid within a vessel, the sensor comprising: an array of sensing elements, each element having a temperature-dependent parameter; a cascaded array of latches, each latch being configured to control a switching element corresponding to a one of the sensing elements thereby to selectively provide a current path to the one of the sensing elements; a signal line to which each of the sensing elements is electrically connected for providing a signal to a measurement module.

24. The sensor of Clause 23, wherein the sensor is configured to be couplable to a further identical sensor thereby to provide an extensible sensor.

25. The sensor of Clause 23 or 24, wherein the sensing elements are connected in parallel.

26. The sensor of any of Clauses 23 to 25, wherein the array of latches is configured to provide a current path individually and sequentially to each sensing element in the array of sensing elements.

27. The sensor of any of Clauses 23 to 26 further comprising: a data input line into an input data channel of a first latch in the array and a data output line from an output data channel of a final latch in the array.

28. The sensor of any of Clauses 23 to 27, wherein the cascaded array of latches is a shift register.

29. The sensor of any of Clauses 23 to 28 further comprising: a clock line, wherein each latch is configured to receive a clock signal via the clock line.

30. The sensor of any of Clauses 23 to 29 further comprising: a power line, wherein each latch is configured to receive power from the power line.

31. The sensor of any of Clauses 23 to 30 further comprising: a ground line, wherein each switching element is configured to selectively ground its corresponding sensing element via the ground line.

32. The sensor of any of Clauses 23 to 31 further comprising: at least one input towards a first side of the sensor and at least one output towards the second side of the sensor, wherein the number of inputs is the same as the number of outputs.

33. The sensor of any of Clauses 23 to 32 comprising one or more of: a flexible substrate; a flexible circuit; an adhesive layer for attachment of the sensor to the vessel; and a flexible printed circuit board.

34. A sensor arrangement comprising: a plurality of sensors according to any of Clauses 23 to 33, wherein the signal lines of the plurality of sensors are connected to provide a shared signal line for the plurality of sensors, and the cascaded array of latches of the plurality of sensors are connected to provide an extended cascaded array of latches across the sensor arrangement.

35. The sensor arrangement of Clause 34, wherein the plurality of sensors are connected by soldering.

36. The sensor or sensor arrangement of any of Clauses 23 to 35, further comprising: a measurement module configured to determine measurement values in response to signals received via the signal line.

37. The sensor or sensor arrangement of Clause 36, wherein the measurement module is configured to determine a temperature distribution of the vessel in dependence on the measurement values.

38. The sensor or sensor arrangement of Clause 36 or 37, wherein the measurement module is configured to determine the temperature distribution in dependence on a model, preferably wherein the model is an interpolant model.

39. The sensor or sensor arrangement of any of Clauses 36 to 38, wherein the measurement module is configured to determine a number of sensing elements in the array and/or a length of the sensor and/or position of each sensing element in the array.

40. The sensor or sensor arrangement of any of Clauses 36 to 39, wherein the measurement module is configured to determine a vessel volume based on a length of the sensor.

41. The sensor or sensor arrangement of any of Clauses 23 to 40, further comprising: a thermal cutout arrangement comprising: a detector for detecting a temperature of the vessel; a latching relay configured to prevent delivery of power to a heating element in response to the detected temperature of the vessel.

42. A thermal cutout arrangement for a hot water tank, the arrangement comprising: a detector for detecting a temperature of the tank; a latching relay configured to prevent delivery of power to a heating element in response to a detected temperature of the tank.

43. The sensor or sensor arrangement or thermal cutout arrangement of Clause 41 or 42, wherein the detector comprises a thermistor, preferably a negative temperature coefficient thermistor.

44. The sensor or sensor arrangement or thermal cutout arrangement of any of Clauses 41 to 43, wherein the detector is configured to generate a reset pulse when a threshold temperature is exceeded, and the latching relay is configured to switch to an open configuration in response to receiving the reset pulse.

45. The sensor or sensor arrangement or thermal cutout arrangement of any of Clauses 41 to 44 further comprising: a manual switch configured to switch the latching relay to a closed configuration when actuated.

46. A water heating system according to any one of Clauses 1 to 14 or 22, wherein the sensor is a sensor or sensor arrangement according to any one of Clauses 23 to 41.

47. A retrofittable tank controller or a controller according to any one of Clauses 15 to 21, wherein the sensor is a sensor or sensor arrangement according to any one of Clauses 23 to 41.

It will be understood that the invention has been described above purely by way of example, and modifications of detail can be made within the scope of the invention. For instance, while the examples refer to heat sources including gas boilers, electrical immersion heating elements and heat pumps as heat sources, it will be appreciated that a wide variety of heat sources can be used, singly or in suitable combinations.

While mention is made of between 8 to 12 sensors located at even linear intervals a typical domestic hot water tank, and 20 or more sensors for larger commercial applications, it will be appreciated that the invention described above may include fewer sensors, e.g. 2 or more.

Reference numerals appearing in the claims are by way of illustration only and shall have no limiting effect on the scope of the claims.

## Claims

1. A sensor for measuring a temperature distribution of fluid within a vessel, the sensor comprising: an array of sensing elements, each element having a temperature-dependent parameter; a cascaded array of latches, each latch being configured to control a switching element corresponding to a one of the sensing elements thereby to selectively provide a current path to the one of the sensing elements; a signal line to which each of the sensing elements is electrically connected for providing a signal to a measurement module.

2. The sensor of Claim 1, wherein the sensor is configured to be couplable to a further identical sensor thereby to provide an extensible sensor.

3. The sensor of Claim 1 or 2, wherein the sensing elements are connected in parallel.

4. The sensor of any preceding claim, wherein the array of latches is configured to provide a current path individually and sequentially to each sensing element in the array of sensing elements.

5. The sensor of any preceding claim, further comprising: a data input line into an input data channel of a first latch in the array and a data output line from an output data channel of a final latch in the array.

6. The sensor of any preceding claim, wherein the cascaded array of latches is a shift register.

7. The sensor of any preceding claim further comprising one or more of: a clock line, wherein each latch is configured to receive a clock signal via the clock line; a power line, wherein each latch is configured to receive power from the power line; and: a ground line, wherein each switching element is configured to selectively ground its corresponding sensing element via the ground line.

8. The sensor of any preceding claim further comprising: at least one input towards a first side of the sensor and at least one output towards the second side of the sensor, wherein the number of inputs is the same as the number of outputs.

9. The sensor of any preceding claim comprising one or more of: a flexible substrate; a flexible circuit; an adhesive layer for attachment of the sensor to the vessel; and a flexible printed circuit board.

10. A sensor arrangement comprising: a plurality of sensors according to any preceding claim, wherein the signal lines of the plurality of sensors are connected to provide a shared signal line for the plurality of sensors, and the cascaded array of latches of the plurality of sensors are connected to provide an extended cascaded array of latches across the sensor arrangement, optionally wherein the plurality of sensors are connected by soldering.

11. The sensor or sensor arrangement of any preceding claim, further comprising: a measurement module configured to determine measurement values in response to signals received via the signal line, optionally wherein the measurement module is configured to determine a temperature distribution of the vessel in dependence on the measurement values.

12. The sensor or sensor arrangement of Claim 11, wherein the measurement module is configured to determine the temperature distribution in dependence on a model, preferably wherein the model is an interpolant model.

13. The sensor or sensor arrangement of Claims 11 or 12, wherein the measurement module is configured to determine a number of sensing elements in the array and/or a length of the sensor and/or position of each sensing element in the array.

14. The sensor or sensor arrangement of any of Claims 11 to 13, wherein the measurement module is configured to determine a vessel volume based on a length of the sensor.

15. The sensor or sensor arrangement of any preceding claim, further comprising: a thermal cutout arrangement comprising: a detector for detecting a temperature of the vessel; a latching relay configured to prevent delivery of power to a heating element in response to the detected temperature of the vessel.

Figure 1

Figure 2

Figure 3

400

416

Manual Reset

410  404  408

Set

AC supply — 406

Fixed resistor

Detection
Circuit

414

Reset

Latching Relay

Load

NTC resistor

402

Figure 4

Figure 5

Figure 6

Figure 7

Figure 8

Figure 9

Figure 10

Figure 11

Figure 12